# EUROPEAN PATENT SPECIFICATION

(11) **EP 3 792 530 B1**
(45) Date of publication and mention of the grant of the patent: **19.07.2023**
(21) Application number: 19196975.7
(22) Date of filing: 12.09.2019
(51) Int. Cl.: F16K 31/04, F24C 15/20, F16K 3/02, F24F 13/12

(54) **FUME EXTRACTOR HOOD AND VENTILATION SYSTEM**
RAUCHABZUGSHAUBE UND BELÜFTUNGSSYSTEM
HOTTE D'EXTRACTION DE FUMÉE ET SYSTÈME DE VENTILATION

(43) Date of publication of application: 17.03.2021
(73) Proprietor: Franke Futurum AB, 934 24 Byske (SE)
(72) Inventor: Nazari, Mehdi, 93155 Skelleftea (SE); Nyström, Hans, 93498 Byske (SE)
(74) Representative: LBP Lemcke, Brommer & Partner Patentanwälte mbB

(56) References cited:
- EP-A1- 0 422 316
- EP-A2- 2 090 835
- US-A- 4 783 048
- US-A- 5 014 730
- US-A1- 2013 233 295

## Description

The invention relates to a fume extractor hood according to the preamble of claim 1, and to a ventilation system according to claim 18.

The energy efficiency of new buildings and in case of the refurbishment of existing buildings plays an important role in view of environmental and financial aspects today. On the other hand, a good indoor climate is also of importance for the building residents, making it necessary to replace used air by fresh air, which air has to be heated to room temperature on cold days and/or can transport a lot of humidity on warm days. When cooking, the air in the kitchen can be full of unpleasant odors, which are at least partially removed by a fume extractor hood.

Fume extractor hoods with exhaust air operation will guide the captured air to the outside. The unpleasant odors are removed efficiently, but warm air is wasted through the exhausting duct. In recirculation extractor hoods, the air captured by the extractor hood is cleaned by a cleaning device and led back directly to the kitchen. Heated air within the kitchen is not wasted, but the performance of recirculation extractor hoods strongly depends on the capability of the cleaning devices, which decrease over time. Additionally, the moisture content of the air is not reduced.

Especially in Nordic countries, the fume extractor hoods in a block building or similar are in connection with a central ventilation unit and do not necessarily have a motor within the fume extractor hood itself. In this case, the necessary airflow for aspiring fumes and for the ventilation of rooms is provided by a central flow generator. In a normal operation mode, a central ventilation of the kitchen is achieved through the fume extractor hood, wherein the opening area to the central ventilation unit is set by a damper, which is arranged in the fume extractor hood in the flow path of the air. The odor reduction during cooking is achieved by adjusting the damper through increasing the opening area to the central ventilation unit and/or by increasing the pressure within the ventilation system through the central flow generator.

The positioning of the damper is therefore essential for a good odor reduction over time and quiet operation of the fume extractor hood in the different modes. However, the functionality and in particular the mobility of the damper should be ensured all the time, since this is essential for removing odors from the kitchen during cooking.

Further, all these fume extractor hoods can have external air guiding elements, which are arranged at the circumference of the extractor hood and improve the odor reduction capability by guiding the captured air. However, these external air guiding elements can also influence the headroom and can have also an aesthetically disturbing effect.

In addition, the damper can be also present in a fume extractor hood with an internal flow generator, which can be operated in an exhaust and/or recirculation mode for the adjustment of the ratio of the exhaust to the recirculation airflow. In this case the need for external guiding elements is reduced.

If buildings are built with small dimensions of exhaust ducts the need for high pressure in the system to achieve good odor reduction is higher and the risk of leakage and unpleasant noise increases. The same effect can occur if the maximum opening area in the damper is small.

US 5,014,730 A discloses a knife gate for use in the paper industry for flow control of pulp and slurry. Said knife gate has a leading edge and is guided within a body having a guide opening across a passageway and into seating engagement with a gate seat, thus selectively closing and opening the passageway to a liquid media flow.

US 4,783,048 A discloses a slide gate damper system for the use in ducts that convey heated air and toxic gases in power plants. The slide gate is moved by means of motor means comprising gear wheels that engage with cross pins or via a rack and pinion system.

While the known gate devices may be useful for industrial purposes, they are not well suited for the above-described domestic uses.

Documents EP 2090835 A2 and US 2013/233295 A1 disclose further prior art relevant for the invention.

It is therefore an object of the present invention to provide a fume extractor hood comprising a device for the adjustment of an airflow and a ventilation system with a compact and light design.

It is further an object of the present invention to provide a fume extractor hood comprising a device for the adjustment of an airflow and a ventilation system, which can be manufactured and installed at reasonable cost.

It is further an object of the present invention to provide a fume extractor hood comprising a device for the adjustment of an airflow and a ventilation system, which have a long lifetime without loss of functionality.

These objects of the invention and further objects are achieved by a fume extractor hood according to claim 1 and by a ventilation system for a house or a building according to claim 18. Further embodiments of the fume extractor hood are specified in dependent claims 2 to 17. In dependent claim 19, a further embodiment of the ventilation system is specified.

The object of the present invention is achieved by a fume extractor hood comprising a suction opening for aspiring fumes and an exhaust duct, wherein the inlet and the exhaust duct are fluidically connected for discharging an airflow including the aspired fumes through the exhaust duct towards the outside. The fume extractor hood comprises further a device for the adjustment of an airflow as described below, which is arranged between the suction opening and the exhaust duct, wherein the suction opening is fluidically connected to the inlet of the device and the outlet of the device is fluidically connected to the exhaust duct.

The device for the adjustment of an airflow within the fume extractor hood according to the present invention comprises a housing having an inlet and an outlet, which are fluidically connected for conducting the airflow along a flow path from the inlet to the outlet, and a sheet, movable into the flow path along a moving direction, for adjusting an aperture area in the flow path, wherein the sheet is arranged at the inlet or at the outlet or in between the inlet and the outlet. The device for the adjustment of an airflow further comprises a motor, arranged at or nearby the housing, a driving element, arranged in or on the movable sheet, and a connecting element, which is connected to the motor and the driving element, wherein at least one of the housing, the movable sheet, the driving element and the connecting element are made by molding, in particular by metal molding.

Molding and in particular metal molding offers the opportunity to produce at least one of the housing, the movable sheet, the driving element, and the connecting element in a large amount with high precision, which is essential for a durable use of these elements in the respective environment. Preferably, more than one, in particular all, of the above-mentioned elements are made by molding, in particular by metal molding. The driving element on the sheet enables a precise and controlled movement of the sheet for adjusting the aperture area in relation to the present circumstances, owing to its interaction with the connecting element. The driving element can be a part of the sheet itself, so that the element comprising sheet and driving element could be produced in one step, e.g. by molding in a respective molding tool, which reduces the production costs. Alternatively, the driving element can be connected with the sheet by gluing, welding or screwing.

Preferably, the driving element extends over that particular part of the sheet, which can be moved into the airflow, so that the length of the sheet can be reduced to a minimum. An additional extension of the sheet for arranging the driving element is no longer necessary, so that the device is getting more compact and the use of material in production of this element is reduced.

In a preferred embodiment of the fume extractor hood, the sheet is movable between a first fixed position and a second fixed position. The first fixed position and second fixed position of the sheet correspond to two different operational modes of the device, which differ in their aperture area. In the first fixed position, the aperture area is larger compared to the second fixed position, so that a higher air volume can be transported along the flow path. In the second fixed position, the aperture area is smaller than in the first fixed position, which is sufficient for a basic ventilation of a room through the device. Alternatively, the flow path between the inlet and the outlet of the device could also be completely closed by the sheet in the second fixed position, so that the airflow is prevented from escaping through the outlet.

In a further embodiment of the fume extractor hood, the motor is connected to a control device, wherein the control device controls a transmission of the motor in such a way that the sheet is movable between the first fixed position and the second fixed position. The control device allows an electronically controlled movement of the sheet. Preferably, the first fixed position and second fixed position can be adjusted electronically so that any mechanical fixing means for setting a stop for the sheet are not absolutely necessary.

Alternatively or in combination, the first fixed position and the second fixed position are set by respective fixing or abutting means, which are attachable to the housing. The fixing means define a stop for the sheet, between which the sheet is movable, and can be attached to the housing at a certain position to define a minimum and maximum aperture area, respectively. The respective positions of the fixing means depend on a (target) flow rate and a (target) air volume of the airflow, which is passing the device in the respective mode.

In another preferred embodiment of the fume extractor hood, the housing further comprises at least one guiding element for guiding the sheet during its movement along the moving direction, wherein the guiding element is preferably arranged on at least one side of the housing. The guiding element improves the handling of the sheet and enables a better guidance of the sheet during movement without twisting, especially when there are guiding elements on both sides of the housing.

In a further preferred embodiment of the fume extractor hood, any one of the housing, the movable sheet, the driving element, the connecting element, the fixing means, the guiding element and/or a cover for the motor are made of zinc, especially are made by zinc molding. The use of zinc has the advantage that it has on the one side a higher stability and lifetime expectance compared to elements made of plastic, and, on the other side, it is less expensive and lighter in comparison with elements made of sheet metal.

In a further preferred embodiment, the zinc made elements have a wall thickness less than 0.6 mm, preferably less than 0.5 mm, more preferably 0.4 mm. A thinner element corresponds to the use of less material in the production of the element. Especially in the case of a sheet made out of zinc, the thinner wall thickness results in less restriction in the flow path.

Preferably, the motor is arranged on a side of the housing, which side is parallel to the moving direction of the sheet. The arrangement of the motor on the side reduces the height of the device, resulting in a device which is more compact and which is also suitable for use in undermount fume extractor hoods.

In another preferred embodiment of the fume extractor hood, the driving element is arranged at an edge of the sheet, preferably at the edge next to the motor. The distance between the driving element and the motor is reduced by the arrangement of the driving element at an edge of the sheet, which also reduces technical vulnerability.

In further embodiment, the driving element extends over the length of the sheet. So, the sheet can be moved over the whole length, which allows an easy access to all relevant parts, for example during maintenance.

According to another embodiment, the motor is a step motor, which allows a quickly responding and precise movement of the sheet.

Preferably, the driving element is a gear rack and the connecting element is a gear. The gear as connecting element interacts precisely with the gear rack as driving element, so that the sheet is moved constantly. Further, this mechanical system can be used in various environments, like in a fume extractor hood, in which higher temperatures and a high level of humidity prevail during cooking.

In a further preferred embodiment, an opening area of the inlet and an opening area of the outlet have different shapes, especially in such a manner that the opening area of the outlet has a round or circular shape and the opening area of the inlet has a rectangular or square shape. The shape of the inlet and/or outlet is of relevance for fitting to other parts of the fume extractor hood and allows the connection of the inlet and/or outlet to different kind of ducts for further guidance of the airflow.

The shape influences also the airflow in the device and the further parts of the fume extractor hood. In particular, a bigger opening area of the inlet enables a reduction of the pressure of the airflow while having the same flow rate per time interval, which also results in a reduction of the noise caused by the fume extractor hood. A smaller opening area of the outlet causes the need for an increase of the pressure to achieve the corresponding airflow and odor reduction capability.

In another preferred embodiment of the fume extractor hood, the housing further comprises at least one transition element for changing the opening area of the outlet and/or the opening area of the inlet. The transition element provides a geometry change from one shape to another shape, e.g. from a rectangular shape of the opening area of the inlet to a round shape of the opening area of the outlet. In particular, the opening area of the inlet can be increased compared to the outlet through the transition elements for lowering the pressure of the air flow within the fume extractor hood, the ventilation system or the exhaust duct. In particular, the transition elements enable a maximum opening area of a rectangular shaped inlet going into a round shaped outlet.

The transition element can form a part of the housing and extend completely over that part. Alternatively, several transition elements could be arranged on the housing in succession, and each one of them could only slightly change the opening area and/or the shape of the inlet and/or outlet.

Preferably, a measuring device is arranged along the flow path at the housing for measuring a pressure of the airflow between the inlet and the outlet. Especially, the measuring device can be integrated in the housing, so that the measurements are carried out under the same ambient conditions. The results of the measuring device are also used for the adjustment of the first and second fixed positions of the sheet in the flow path.

According to an alternative embodiment, the housing, in particular comprising a guiding part, a further part, the transition element, the guiding element and/or the measuring device is made as one-piece by molding. A one-piece element has the advantage that the time for assembly of the device can be decreased while the quality of the device is increased due to a minimized leakage of the device.

According to the present invention, parts of the device for the adjustment of an airflow like the housing and/or the sheet are preferably made by metal molding. However, as an alternative, these parts can also be produced in another suitable way, if desired, e.g. from sheet metal or from plastic, especially when the remaining device is implemented according to any of the above-mentioned preferred embodiments.

In a preferred embodiment, the fume extractor hood further comprises an air guiding element within the hood, which fluidically connects the suction opening with the exhaust duct, wherein the device for the adjustment of an airflow is arranged within the air guiding element or as connecting device between the air guiding element and the exhaust duct.

In an alternative embodiment, the fume extractor hood further comprises a flow generator for providing the airflow for aspiring fumes. With the integrated flow generator, an airflow with a high pressure can be achieved for an efficient collection of the aspired fumes during cooking.

In yet another preferred embodiment, the fume extractor hood further comprises a cleaning device for partially cleaning the airflow for recirculation. The cleaning device can be arranged around part of the air guiding element or can form part of the air guiding element. The recirculation allows a portion of the warm air to be recirculated into the room, while reducing odors in the air by the cleaning device. This also results in a reduced airflow in the exhaust duct and increases the energy efficiency.

The object of the present invention is also achieved by a ventilation system for a house or building, comprising at least one fume extractor hood as described above, and a central exhaust duct, which is connected to the exhaust duct of the at least one fume extractor hood, wherein the central exhaust duct comprises a central flow generator for providing the airflow. With the connection of the extractor hood to the central exhaust duct, the kitchen and other rooms of the house or building can be ventilated through the fume extractor hood. This has a positive effect on the indoor climate, especially when air with a high level of humidity is removed from the kitchen.

Preferably, the flow generator of the fume extractor hood and the central flow generator are concerted to each other for prevailing a constant pressure in the exhaust duct and the central exhaust duct. Especially in the case, when the flow generator of the fume extractor hood is running, the central flow generator has to be operated accordingly to avoid a back pressure within the central exhaust duct.

Further features and advantages of the present invention will now be described in connection with exemplary embodiments with relation to the drawings.
- Figure 1: shows a schematic lateral plan view of a device for the adjustment of an airflow as used in a fume extractor hood according to the invention;
- Figure 2: shows a further schematic lateral plan view of a device as used in a fume extractor hood according to the invention;
- Figure 3: shows another schematic lateral plan view on the inlet of a device as used in a fume extractor hood according to the invention;
- Figures 4a and 4b: show schematically two embodiments of a fume extractor hood with a device for the adjustment of an airflow through the fume extractor hood according to the invention; and
- Figure 5: shows a schematic sectional view of a building with a ventilation system according to the invention.

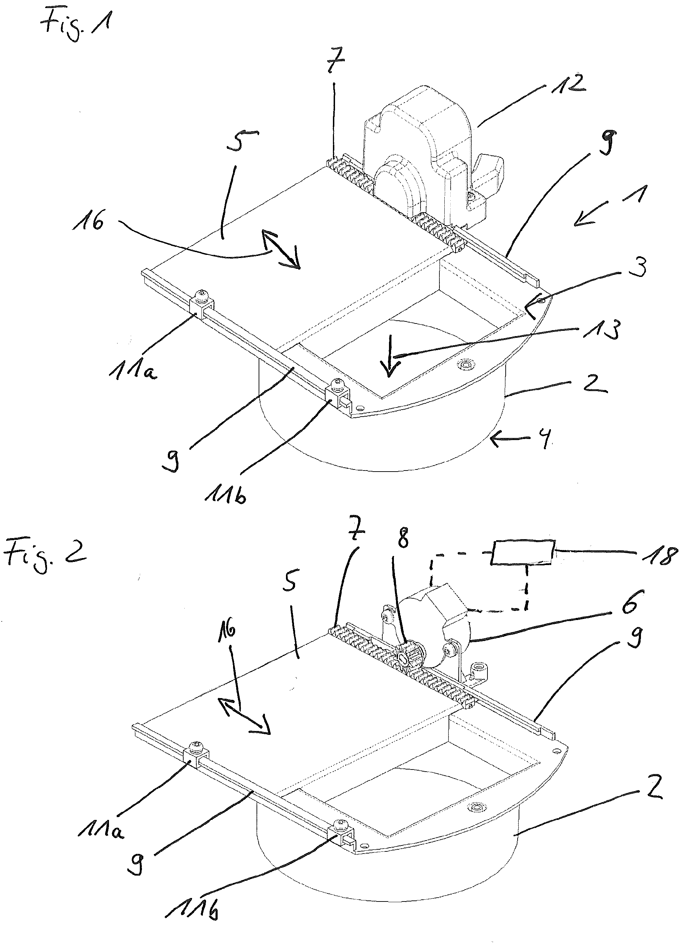

Figure 1 shows a device 1 for the adjustment of an airflow as used in a fume extractor hood according to the invention. The device 1 comprises a housing 2 having an inlet 3 and an outlet 4. The inlet 3 and the outlet 4 are fluidically connected for guiding an airflow 13 along a flow path through the housing 2.

Further, the device 1 comprises a sheet 5, which is arranged at the inlet 3 of the housing 2. Alternatively, the sheet 5 could also be arranged at the outlet 4 or in any position in between the inlet 3 and the outlet 4. The sheet 5 is movable along a moving direction 16, so that the sheet 5 could be placed in the flow path of the airflow 13 for adjusting an aperture area (not shown). For moving the sheet 5 along the moving direction 16 into the flow path of the airflow 13 and for adjusting the aperture area 14, the sheet 5 comprises a driving element 7, which is connected to a motor 6 (not shown). The motor 6 is covered by a cover 12 to avoid deposits on the motor 6, which could influence the flawless functionally of the motor 6.

The driving element 7 is arranged on a side of the sheet 5, which is parallel to the moving direction 16, and extends over that particular part of the sheet 5, which is moved into the airflow 13. This allows a compact design of the device 1 and avoids a large space requirement for the device 1, for example compared to the case when the driving element 7 is arranged as an extension of the sheet 5. The driving element 7 extends over the whole length of the sheet 5 for a maximum mobility of the sheet 5 and for a good accessibility to all parts of the device 1.

The housing 2, the sheet 5, the driving element 7, the cover 12 and other elements of the device 1 are preferably made by metal molding, which allows a production of these elements at large scale with high precision and for low costs. In addition, especially complex geometric structures of the housing 2, the sheet 5, the driving element 7, the cover 12 and other elements can be produced more easily and accurately by molding, which also reduces the scrap quantity.

As shown in Figure 1, the driving element 7 is built as a gear rack allowing a precise movement of the sheet 5 along the moving direction 16. The gear rack as driving element 7 is placed in the present case on top of the sheet 5 and can be attached to the sheet 5 by gluing, welding or screwing, or both sheet 5 and gear rack are made integrally as a single element by molding, in particular by metal molding. Alternatively, the gear rack could also be built within the sheet 5 in the form of slits in the case of a thin sheet 5 or indentations within the sheet 5.

Further, the housing 2 comprises two guiding elements 9, which are arranged on opposite sides of the housing 2, parallel to the moving direction 16 for guiding the sheet 5 during its movement. The guiding elements 9 can prevent a displacement of the sheet 5, especially a tilting of the sheet 5 during its movement. Further, two fixing means 11a and 11b can be attached to the guiding element 9 for setting two stops of abutments for the sheet 5, between which the sheet 5 is movable. The fixing means 11a and 11b are attachable at any position along the guiding element 9 and are fixed by screws to the guiding element 9. The positions of the fixing means 11a and 11b are set during the installation and depend for example on the lowest and highest flow rate of the airflow 13 through the housing 2. In case of an airflow 13 with a low flow rate, the sheet 5 is moved along the moving direction 16 until it stops at fixing means 11b, thus providing a small aperture area 14. This allows a basic ventilation through that small aperture area. In case of an airflow 13 with a high flow rate, which is for example necessary during cooking for aspiring and removing fumes and odors, the sheet 5 is moved against the moving direction 16 until it stops at the other fixing means 11a, resulting in a larger aperture area 14.

In Figure 2, the cover 12 has been removed from the housing 2. Under said cover 12, the motor 6 and the connecting element 8, which connects the motor 6 with the driving element 7, are arranged. The motor 6 is arranged at a side of the housing 2, which allows to reduce the height of the device 1 and offers a good electrical connection to the motor 6. Additionally, the motor 6 is arranged on that particular side of the housing 2 which is parallel to the moving direction 16 and located closely to the driving element 7. Further, the arrangement of the motor 6 at the side of the housing 2 allows a good accessibility to the sheet 5 and the fixing means 11a and 11b, which are arranged on the side of the housing 2 opposite to the motor 6. Especially in the case that the fixing means 11a, 11b are set on the housing 2 to adjust the minimum and maximum aperture area 14, an easy access to these elements helps the technician to perform this task faster.

A gear acts as connecting element 8, which is directly connected to the motor 6. The teeth of the gear as connecting element 8 interact with a gear rack, which constitutes the driving element 7. This allows a controlled, precise and also fast movement of the sheet 5 until the stop at the respective fixing mean 11a, 11b. The motor 6 can be built as a step motor for a controlled movement of the sheet 5.

As shown in Figure 2, the step motor 6 is connected to a control device 18, which controls the transmission of the motor 6 to the sheet 5 through the connecting element 8. The control device 18 allows an electronically adjustment of the first fixed position and second fixed position so that the fixing means 11a, 11b are not absolutely necessary for setting the respective stop, which makes the adjustment of the first fixed position and second fixed position quicker.

The housing 2, the sheet 5 and the driving element 7 are made of metal, preferably are made of zinc. In particular, zinc molding is used for the production of the parts of the device 1, which allows the production of the housing 2, the sheet 5 or the driving element 7 with a high reproducibility and high precision.

Using of zinc for the device 1 has some advantages compared to other metals, especially in comparison to aluminum. Although aluminum is lighter than zinc, the melting point of zinc, about 420°C, is lower than the melting point of aluminum, about 660°C, making the production more energy-efficient, faster and therefore more cost-efficient. The weight of the device 1, when used in a fume extractor hood, a ventilation system or an exhaust duct, is not of that importance, so that zinc as material for the housing 2, the sheet 5 or the driving element 7 could be used without any restriction. However, the higher specific weight of zinc can be compensated in this case by making the thickness thinner due to a considerably higher strength of zinc. Using zinc molding for forming these elements allows to reduce the wall thickness of these elements lower than 0.6 mm, in particular down to 0.5 mm or 0.4 mm without compromising the stability of the device 1.

In addition to the housing 2, the sheet 5 and the driving element 7, other elements like the connecting element 8, the guiding elements 9, the fixing means 11a, 11b and also the cover 12 can be made by zinc molding. Additionally, the sheet 5 and the driving element 7 as well as the housing 2, guiding element 9, transition elements 10a, 10b and/or the measuring device 15 can be made as a one-piece element by molding, so that the time for assembling the device 1 is further reduced, resulting in lower manufacturing costs. Further, a one-piece element has the advantage that the leakage within the device 1, in particular within the housing 2, is strongly decreased as transitions between single elements are avoided, which are always vulnerable for the leakage of air out of the flow path or duct. Additionally, one-piece elements can be produced with high and constant quality, thus resulting in a reduced scrap quantity.

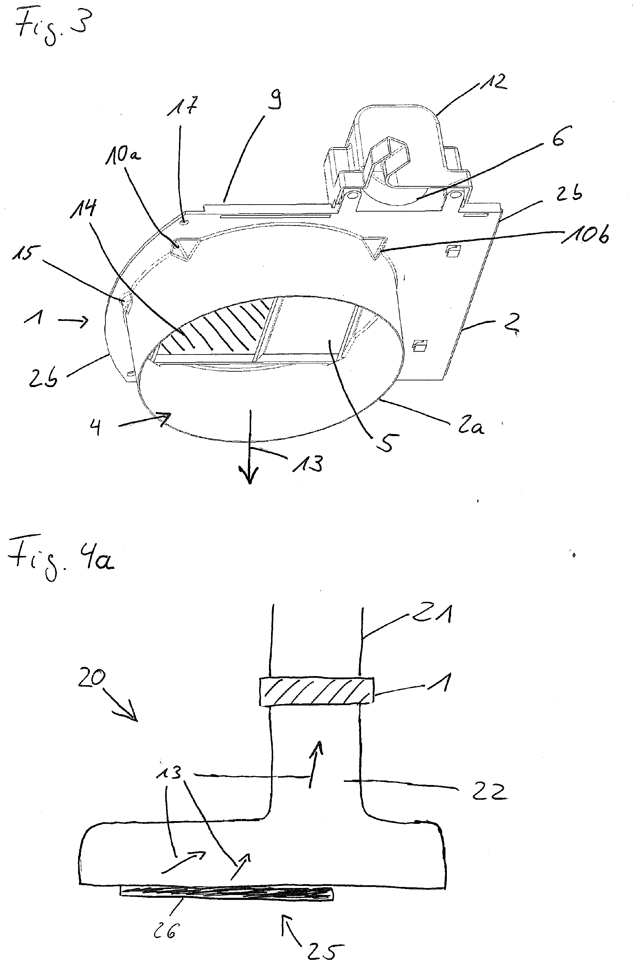

In Figure 3, the device 1 is shown from the top side, facing the outlet 4. The sheet 5 is arranged, as shown in Figures 1 and 2, at the inlet 3 of the housing 2 in such a position that an aperture area 14 is opened through which the airflow 13 can enter the device 1. The aperture area 14 depends on the position of the sheet 5. When the sheet 5 stops at the fixing means 11a, the aperture area is large, so that an airflow 13 with a high flow rate could pass. In particular, the aperture area 14 can correspond to the opening area of the inlet 3 of the device 1.

In the case that the sheet stops at the fixing means (not shown), the aperture area 14 is quite small, so that a basic ventilation of the kitchen through this aperture area 14 is possible.

The housing 2 of the device 1 comprises a guiding part 2a for guiding the airflow 13, which passed the inlet 3, along the flow path towards the outlet 4 and in particular to an exhaust duct. Furthermore, the housing 2 comprises an even part 2b, which surrounds the guiding part 2a at the inlet 3 and over which the sheet 5 is at least partly moved. The guiding part 2a is also a connecting element to the exhaust duct, in particular the exhaust duct of the fume extractor hood or a ventilation system. The motor 6 is fixed to the part 2b at one side and the guiding elements 9 are also part of the part 2b. The part 2b can also have some holes 17 for fixing the device 1 to the fume extractor hood, the ventilation system, the exhaust duct or the like.

The guiding part 2a, as connecting element to the exhaust duct of the fume extractor hood or a ventilation system, has essentially a circular shape and forms a duct for guiding the airflow 13 from the inlet 3, which has an opening area of square or rectangular shape, to the outlet 4, which has an opening area of circular or round shape. However, the shape of the guiding part 2a as well as of the opening area at the outlet 4 can also have other than circular shapes, like a square, rectangular, polygonal or oval shape. The guiding part 2a of the housing 2 further comprises, towards the outlet 4, some transition elements 10a and 10b for extending the opening area of the inlet 3 compared to the outlet 4 of the device 1. By increasing the opening area at the inlet 3, the pressure of the airflow 13 can be reduced without affecting the evacuation capability. Especially in the case, when the space within the fume extractor hood, the ventilation system or the exhaust duct is limited, the opening area at the inlet 3 can be extended through the transition elements 10a, 10b for lowering the pressure of the airflow 13, which also reduces the noise.

For measuring the pressure at a certain position along the flow path of the airflow 13, one or more measuring devices 15 can be arranged between the inlet 3 and the outlet 4 in or on the housing 2, especially in or on the guiding part 2a. The measuring device 15 can comprise a test valve, which is preferably arranged at the inner wall of the guiding part 2a of the housing 2. The test valve can be connected to a measuring unit for measuring the pressure and/or flow through the test valve, which allows the adjustment of the aperture area 14 and the fixing means 11a and 11b. The housing 2, comprising the guiding part 2a, the part 2b, the guiding elements 9 and the measuring device 15 is preferably made as one-piece element by metal molding, in particular zinc molding.

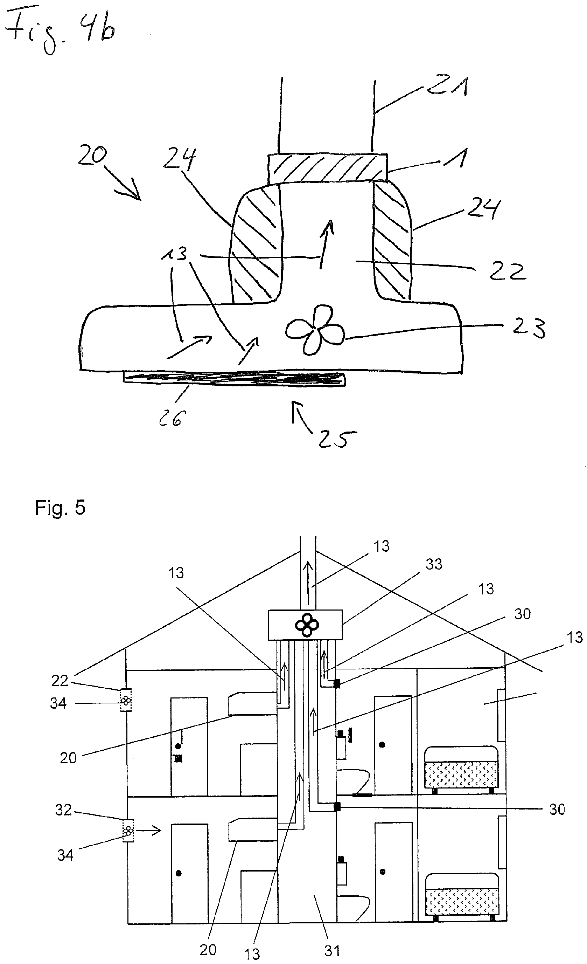

Figures 4a and 4b schematically show a fume extractor hood 20 in a cross-sectional side view without an internal flow generator (Figure 4a) and with an internal flow generator (Figure 4b), respectively. An airflow 13 within the extractor hood 20 for aspiring fumes is provided by a central flow generator of a central ventilation unit in case that the fume extractor hood does not compromise an internal flow generator as shown in Figure 4a. Before the thus captured air enters the extractor hood 20 at the suction opening 25, a grease filter 26 absorbs fat and other particles from the aspired fumes for avoiding unwanted deposits of these particles within the fume extractor hood 20 so that the interior of the fume extractor hood 20 is protected. Otherwise, the efficiency of the extractor hood 20 would be reduced and an enhanced cleaning operation may become necessary. Within the extractor hood 20, the airflow 13 with the aspired fumes is guided through an air guiding element 22 towards an exhaust duct 21 for discharging the airflow 13 including the aspired fumes towards the outside, especially through a central ventilation.

Alternatively, the airflow 13 could be also provided individually or in addition to the central flow generator by a flow generator 23 within the fume extractor hood 20 as shown in Figure 4b. In this case, the flow generator 23 is preferably a fan with a motor, which is activated during cooking for capturing fumes and odors. The flow generator 23 could also be a suction device or any other device for providing the airflow 13.

The device 1, as shown in Figure 4a and 4b, is functioning as a connecting element between the air guiding element 22 and the exhaust duct 21, so that the inlet 3 of the device 1 is fluidically connected with the suction opening 25 and the outlet 4 of the device 1 is fluidically connected with the exhaust duct 21. In an alternative embodiment, the device 1 can also be integrated within the air guiding element 22 at any place between the suction opening 25 and the exhaust duct 21.

The fume extractor hood 20 with an internal flow generator 23 as shown in Figure 4b can further comprise a cleaning device 24, which partially surrounds the air guiding element 22. The airflow 13 can at least partially leak from the air guiding element 22 through the cleaning device 24, so that a part of the airflow 13 can be recirculated into the kitchen. Unpleasant odors and fumes are removed from the recirculation flow by the cleaning device 24 while warm air is kept within the kitchen. For the recirculation through the cleaning device 24, the air guiding element 22 has to be at least partially permeable in the area of the cleaning device 24, for example through openings in the wall of the air guiding element 22. Alternatively, parts of the wall of the air guiding element 22 or even the complete air guiding element 22 could be part of the cleaning device 24, which can be preferably devised as a charcoal filter or similar. By setting the aperture area 14 in dependency of the highest and lowest flow rate of the airflow 13, the splitting of the airflow 13 in a recirculation flow and an exhaust flow can be adjusted.

The fume extractor hood 20 can be part of a ventilation system for a house or building as shown in Figure 5. The ventilation system additionally comprises a central exhaust duct 31, which is fluidically connected to the exhaust duct 21 of one or, in the case of an apartment house as shown in Figure 5, several fume extractor hoods 20. For providing an airflow 13 within the central exhaust duct 31 and for removing used air from the kitchen through a fume extractor hood 20 or other rooms through an exhaust opening 30 of the apartment house, a central flow generator 33 is arranged in the central exhaust duct 31, typically towards the end of the central exhaust duct 31, for example, on the roof.

The central flow generator 33 can provide an airflow 13 for a basic ventilation of the rooms and the kitchen through the fume extractor hood 20 and also an airflow with a higher flow rate for aspiring fumes, for example during cooking. Even in case of the presence of a central flow generator 33, the fume extractor hoods 20 can include an individual flow generator 23, as shown in Figure 4b, which will help the central flow generator 33 to achieve the desired air flow (not shown in Figure 5). For a perfect functionality of the ventilation system, it is recommended that either all fume extractor hoods 20 within the building are equipped with an internal flow generator or none of the fume extractor hoods 20 include an internal flow generator to avoid transferring odors between the apartments.

In case that the fume extractor hood 20 includes a flow generator 23 and the ventilation system comprises also a central flow generator 33, the flow generator 23 and the central flow generator 33 are concerted to each other for prevailing a constant pressure in the exhaust duct 21 and the central exhaust duct 31.

For avoiding a low pressure in the house or building, one or more air inlet devices 32, preferably comprising a further flow generator 34, for providing a fresh airflow into the rooms, are placed in different rooms of the house or building so that the exhaust air is replaced by fresh air for a good indoor climate.

### List of reference numerals

- 1: Device
- 2: Housing
- 2a: Guiding part
- 2b: Part
- 3: Inlet
- 4: Outlet
- 5: Sheet
- 6: Motor
- 7: Driving element
- 8: Connecting element
- 9: Guiding element
- 10a, 10b: Transition element
- 11a, 11b: Fixing means
- 12: Cover
- 13: Airflow
- 14: Aperture area
- 15: Measuring device
- 16: Moving direction
- 17: Hole
- 18: Control device
- 20: Extractor hood
- 21: Exhaust duct
- 22: Air guiding element
- 23: Flow generator
- 24: Cleaning device
- 25: Suction opening
- 26: Filter
- 30: Exhaust opening
- 31: Central exhaust duct
- 32: Air inlet device
- 33: Central flow generator
- 34: Flow generator

## Claims

1. A fume extractor hood (20), comprising a suction opening (25) for aspiring fumes and an exhaust duct (21), wherein the suction opening (25) and the exhaust duct (21) are fluidically connected for discharging an airflow including the aspired fumes through the exhaust duct (21) towards the outside,
wherein between the suction opening (25) and the exhaust duct (21), there is arranged a device (1) for the adjustment of an airflow (13) within the fume extractor hood (20), said device (1) comprising:
a housing (2) having an inlet (3) and an outlet (4), which are fluidically connected for conducting the airflow (13) along a flow path from the inlet (3) to the outlet (4);
a sheet (5), movable into the flow path along a moving direction (16), for adjusting an aperture area (14) in the flow path, wherein the sheet (5) is arranged at the inlet (3) or at the outlet (4) or in between the inlet (3) and the outlet (4);
wherein the suction opening (25) is fluidically connected to the inlet (3) of the device (1) and the outlet (4) of the device (1) is fluidically connected to the exhaust duct (21),
**characterized in that** the device (1) further comprises:
a motor (6), arranged at or nearby the housing (2);
a driving element (7), arranged in or on the movable sheet (5); and
a connecting element (8), which is connected to the motor (6) and the driving element (7);
wherein at least one of the housing (2), the movable sheet (5), and the driving element (7) are made by molding, in particular by metal molding.

2. The fume extractor hood (20) according to claim 1, **characterized in that** the sheet (5) is movable between a first fixed position and a second fixed position, which are preferably set by respective fixing means (11a, 11b) attachable to the housing (2).

3. The fume extractor hood (20) according to claim 2, **characterized in that** the motor (6) is connected to a control unit, wherein the control device (18) controls a transmission of the motor (6) in such a way that the sheet (5) is movable between the first fixed position and the second fixed position, which are preferably adjustable through the control device (18).

4. The fume extractor hood (20) according to any one of claims 1 to 3, **characterized in that** the housing (2) further comprises at least one guiding element (9) for guiding the sheet (5) during its movement along the moving direction (16), wherein the guiding element (9) is preferably arranged on at least one side of the housing (2)

5. The fume extractor hood (20) according to any one of claims 1 to 4, **characterized in that** any one of the housing (2), the movable sheet (5), the driving element (7), the connecting element (8), the fixing means (11a. 11b), a guiding element (9) and/or a cover (12) for the motor (6) are made of zinc, especially are made by zinc molding.

6. The fume extractor hood (20) according to claim 5, **characterized in that** the zinc made elements have a wall thickness less than 0.6 mm, preferably less than 0.5 mm, more preferably 0.4 mm.

7. The fume extractor hood (20) according to any one of claims 1 to 6, **characterized in that** the motor (6) is arranged on a side of the housing (2), which side is parallel to the moving direction (16) of the sheet (5).

8. The fume extractor hood (20) according to any one of claims 1 to 7, **characterized in that** the driving element (7) is arranged at an edge of the sheet (5), preferably at the edge next to the motor (6), and preferably extends over the length of the sheet (5).

9. The fume extractor hood (20) according to any one of claims 1 to 8, **characterized in that** the motor (6) is a step motor.

10. The fume extractor hood (20) according to any one of claims 1 to 9, **characterized in that** the driving element (7) is a gear rack and the connecting element (8) a gear.

11. The fume extractor hood (20) according to any one of claims 1 to 10, **characterized in that** an opening area of the inlet (3) and an opening area of the outlet (4) have different shapes, especially that the opening area of the outlet (4) has a round or circular shape and the opening area of the inlet (3) has a rectangular or square shape.

12. The fume extractor hood (20) according to claim 11, **characterized in that** the housing (2) further comprises at least one transition element (10a, 10b) for changing, in particular increasing, the opening area of the outlet (4) and/or the opening area of the inlet (3).

13. The fume extractor hood (20) according to any one of claims 1 to 12, **characterized in that** a measuring device (15) is arranged along the flow path at the housing (2) for measuring a pressure of the airflow (13) between the inlet (3) and the outlet (4).

14. The fume extractor hood (20) according to any one of claims 1 to 13, **characterized in that** the housing (2), in particular comprising a guiding part (2a), a further part (2b), the transition element (10a, 10b), the guiding element (9), and/or the measuring device (15) is made as one-piece by molding.

15. The fume extractor hood (20) according to any one of claims 1 to 14, further comprising an air guiding element (22) within the fume extractor hood (20), which fluidically connects the suction opening (25) with the exhaust duct (21), wherein the device (1) is arranged within the air guiding element (22) or as connecting device between the air guiding element (22) and the exhaust duct (21).

16. The fume extractor hood (20) according to any one of the claims 14 or 15, further comprising a flow generator (23) for providing the airflow (13) for aspiring fumes.

17. The fume extractor hood (20) according to any one of the claims 14 to 16, further comprising a cleaning device (24) for partially cleaning the airflow (13) for recirculation.

18. A ventilation system for a house or building, comprising
at least one fume extractor hood (20) according to any one of the claims 1 to 17, and a central exhaust duct, which is connected to the exhaust duct (21) of the fume extractor hood (20), wherein the central exhaust duct comprises a central flow generator for providing the airflow (13).

19. The ventilation system according to claim 18, **characterized in that** the flow generator (23) of the fume extractor hood (20) and the central flow generator are concerted to each other for prevailing a constant pressure in the exhaust duct (21) and the central exhaust duct.

## Patentansprüche

1. Dunstabzugshaube (20), umfassend eine Ansaugöffnung (25) zum Ansaugen von Dunst und einen Abluftkanal (21), wobei die Ansaugöffnung (25) und der Abluftkanal (21) fluidisch zum Abführen eines den angesaugten Dunst einschließenden Luftstroms durch den Abluftkanal (21) nach außen verbunden sind,
wobei zwischen der Ansaugöffnung (25) und dem Abluftkanal (21) eine Vorrichtung (1) für die Anpassung eines Luftstroms (13) innerhalb der Dunstabzugshaube (20) angeordnet ist, wobei die Vorrichtung (1) umfasst:
ein Gehäuse (2), das einen Einlass (3) und einen Auslass (4) aufweist, die fluidisch verbunden sind, um den Luftstrom (13) entlang eines Strompfads von dem Einlass (3) zu dem Auslass (4) zu leiten;
eine Platte (5), die entlang einer Bewegungsrichtung (16) in den Strompfad bewegbar ist, zum Anpassen einer Öffnungsfläche (14) im Strompfad, wobei die Platte (5) am Einlass (3) oder am Auslass (4) oder zwischen dem Einlass (3) und dem Auslass (4) angeordnet ist;
wobei die Ansaugöffnung (25) fluidisch mit dem Einlass (3) der Vorrichtung (1) verbunden ist und der Auslass (4) der Vorrichtung (1) fluidisch mit dem Abluftkanal (21) verbunden ist,
**dadurch gekennzeichnet, dass** die Vorrichtung (1) weiter umfasst:
einen Motor (6), der am oder in der Nähe des Gehäuses (2) angeordnet ist;
ein Antriebselement (7), das in oder auf der bewegbaren Platte (5) angeordnet ist; und
ein Verbindungselement (8), das mit dem Motor (6) und dem Antriebselement (7) verbunden ist;
wobei mindestens eines von dem Gehäuse (2), der bewegbaren Platte (5) und dem Antriebselement (7) durch Formgebung, insbesondere durch Metallformgebung, hergestellt ist.

2. Dunstabzugshaube (20) nach Anspruch 1, **dadurch gekennzeichnet, dass** die Platte (5) zwischen einer ersten festen Position und einer zweiten festen Position bewegbar ist, die vorzugsweise durch jeweilige, am Gehäuse (2) anbringbare Befestigungsmittel (11a, 11b) eingestellt sind.

3. Dunstabzugshaube (20) nach Anspruch 2, **dadurch gekennzeichnet, dass** der Motor (6) mit einer Steuereinheit verbunden ist, wobei die Steuervorrichtung (18) ein Getriebe des Motors (6) derart steuert, dass die Platte (5) zwischen der ersten festen Position und der zweiten festen Position bewegbar ist, die vorzugsweise durch die Steuervorrichtung (18) anpassbar sind.

4. Dunstabzugshaube (20) nach einem der Ansprüche 1 bis 3, **dadurch gekennzeichnet, dass** das Gehäuse (2) weiter mindestens ein Führungselement (9) zur Führung der Platte (5) während ihrer Bewegung entlang der Bewegungsrichtung (16) umfasst, wobei das Führungselement (9) vorzugsweise an mindestens einer Seite des Gehäuses (2) angeordnet ist

5. Dunstabzugshaube (20) nach einem der Ansprüche 1 bis 4, **dadurch gekennzeichnet, dass** ein beliebiges von dem Gehäuse (2), der bewegbaren Platte (5), dem Antriebselement (7), dem Verbindungselement (8), den Befestigungsmitteln (11a, 11b), einem Führungselement (9) und/oder einer Abdeckung (12) für den Motor (6) aus Zink, insbesondere durch Zinkguss, hergestellt sind.

6. Dunstabzugshaube (20) nach Anspruch 5, **dadurch gekennzeichnet, dass** die aus Zink hergestellten Elemente eine Wandstärke von weniger als 0,6 mm, vorzugsweise weniger als 0,5 mm, bevorzugter 0,4 mm aufweisen.

7. Dunstabzugshaube (20) nach einem der Ansprüche 1 bis 6, **dadurch gekennzeichnet, dass** der Motor (6) auf einer Seite des Gehäuses (2) angeordnet ist, die parallel zur Bewegungsrichtung (16) der Platte (5) liegt.

8. Dunstabzugshaube (20) nach einem der Ansprüche 1 bis 7, **dadurch gekennzeichnet, dass** das Antriebselement (7) an einer Kante der Platte (5) angeordnet ist, vorzugsweise an der Kante neben dem Motor (6), und sich vorzugsweise über die Länge der Platte (5) erstreckt.

9. Dunstabzugshaube (20) nach einem der Ansprüche 1 bis 8, **dadurch gekennzeichnet, dass** der Motor (6) ein Schrittmotor ist.

10. Dunstabzugshaube (20) nach einem der Ansprüche 1 bis 9, **dadurch gekennzeichnet, dass** das Antriebselement (7) eine Zahnstange und das Verbindungselement (8) ein Zahnrad ist.

11. Dunstabzugshaube (20) nach einem der Ansprüche 1 bis 10, **dadurch gekennzeichnet, dass** ein Öffnungsbereich des Einlasses (3) und ein Öffnungsbereich des Auslasses (4) unterschiedliche Formen aufweisen, insbesondere dass der Öffnungsbereich des Auslasses (4) eine runde oder kreisförmige Form aufweist und der Öffnungsbereich des Einlasses (3) eine rechteckige oder quadratische Form aufweist.

12. Dunstabzugshaube (20) nach Anspruch 11, **dadurch gekennzeichnet, dass** das Gehäuse (2) weiter mindestens ein Übergangselement (10a, 10b) zur Änderung, insbesondere Vergrößerung, des Öffnungsbereichs des Auslasses (4) und/oder des Öffnungsbereichs des Einlasses (3) umfasst.

13. Dunstabzugshaube (20) nach einem der Ansprüche 1 bis 12, **dadurch gekennzeichnet, dass** entlang des Strompfades am Gehäuse (2) eine Messvorrichtung (15) zur Messung eines Druckes des Luftstromes (13) zwischen dem Einlass (3) und dem Auslass (4) angeordnet ist.

14. Dunstabzugshaube (20) nach einem der Ansprüche 1 bis 13, **dadurch gekennzeichnet, dass** das Gehäuse (2), insbesondere umfassend einen Führungsteil (2a), einen weiteren Teil (2b), das Übergangselement (10a, 10b), das Führungselement (9) und/oder die Messvorrichtung (15) durch Formgebung als ein Stück hergestellt ist.

15. Dunstabzugshaube (20) nach einem der Ansprüche 1 bis 14, weiter umfassend ein Luftführungselement (22) innerhalb der Dunstabzugshaube (20), das die Ansaugöffnung (25) mit dem Abluftkanal (21) fluidisch verbindet, wobei die Vorrichtung (1) innerhalb des Luftführungselements (22) oder als Verbindungsvorrichtung zwischen dem Luftführungselement (22) und dem Abluftkanal (21) angeordnet ist.

16. Dunstabzugshaube (20) nach einem der Ansprüche 14 oder 15, weiter umfassend einen Strömungsgenerator (23) zum Bereitstellen des Luftstroms (13) zum Ansaugen von Dunst.

17. Dunstabzugshaube (20) nach einem der Ansprüche 14 bis 16, weiter umfassend eine Reinigungsvorrichtung (24) zur teilweisen Reinigung des Luftstroms (13) zur Umwälzung.

18. Belüftungssystem für ein Haus oder Gebäude, umfassend
mindestens eine Dunstabzugshaube (20) nach einem der Ansprüche 1 bis 17 und einen zentralen Abluftkanal, der mit dem Abluftkanal (21) der Dunstabzugshaube (20) verbunden ist, wobei der zentrale Abluftkanal einen zentralen Strömungsgenerator zur Bereitstellung des Luftstroms (13) umfasst.

19. Belüftungssystem nach Anspruch 18, **dadurch gekennzeichnet, dass** der Strömungsgenerator (23) der Dunstabzugshaube (20) und der zentrale Strömungsgenerator aufeinander abgestimmt sind, damit im Abluftkanal (21) und im zentralen Abluftkanal ein konstanter Druck herrscht.

## Revendications

1. Hotte d'extraction de fumée (20), comprenant une ouverture d'aspiration (25) pour aspirer les fumées et un conduit d'évacuation (21), dans laquelle l'ouverture d'aspiration (25) et le conduit d'évacuation (21) sont reliés fluidiquement pour évacuer un flux d'air comprenant les fumées aspirées à travers le conduit d'évacuation (21) vers l'extérieur,
dans laquelle entre l'ouverture d'aspiration (25) et le conduit d'évacuation (21) est agencé un dispositif (1) pour le réglage d'un flux d'air (13) à l'intérieur de la hotte d'extraction de fumée (20), ledit dispositif (1) comprenant :
un logement (2) présentant une entrée (3) et une sortie (4) qui sont reliées fluidiquement pour conduire le flux d'air (13) le long d'un trajet d'écoulement de l'entrée (3) à la sortie (4) ;
une feuille (5), mobile dans le trajet d'écoulement le long d'une direction de déplacement (16), pour régler une zone d'ouverture (14) dans le trajet d'écoulement, dans laquelle la feuille (5) est agencée au niveau de l'entrée (3) ou de la sortie (4) ou entre l'entrée (3) et la sortie (4) ;
dans laquelle l'ouverture d'aspiration (25) est reliée fluidiquement à l'entrée (3) du dispositif (1) et la sortie (4) du dispositif (1) est reliée fluidiquement au conduit d'évacuation (21),
**caractérisée en ce que** le dispositif (1) comprend en outre :
un moteur (6), agencé au niveau ou à proximité du logement (2) ;
un élément d'entraînement (7), agencé dans ou sur la feuille mobile (5) ; et
un élément de liaison (8), qui est relié au moteur (6) et à l'élément d'entraînement (7) ;
dans laquelle au moins l'un parmi le logement (2), la feuille mobile (5) et l'élément d'entraînement (7) est réalisé par moulage, notamment par moulage métallique.

2. Hotte d'extraction de fumée (20) selon la revendication 1, **caractérisée en ce que** la feuille (5) est mobile entre une première position fixe et une deuxième position fixe, qui sont de préférence définies par des moyens de fixation (11a, 11b) respectifs pouvant être fixés au logement (2).

3. Hotte d'extraction de fumée (20) selon la revendication 2, **caractérisée en ce que** le moteur (6) est relié à une unité de commande, dans laquelle le dispositif de commande (18) commande une transmission du moteur (6) d'une manière telle que la feuille (5) est mobile entre la première position fixe et la deuxième position fixe, qui sont de préférence réglables grâce au dispositif de commande (18).

4. Hotte d'extraction de fumée (20) selon l'une quelconque des revendications 1 à 3, **caractérisée en ce que** le logement (2) comprend en outre au moins un élément de guidage (9) pour guider la feuille (5) lors de son déplacement le long de la direction de déplacement (16), dans laquelle l'élément de guidage (9) est de préférence disposé sur au moins un côté du logement (2).

5. Hotte d'extraction de fumée (20) selon l'une quelconque des revendications 1 à 4, **caractérisée en ce que** l'un quelconque parmi le logement (2), la feuille mobile (5), l'élément d'entraînement (7), l'élément de liaison (8), les moyens de fixation (11a. 11b), un élément de guidage (9) et/ou un capot (12) pour le moteur (6) est réalisé en zinc, notamment est réalisé par moulage de zinc.

6. Hotte d'extraction de fumée (20) selon la revendication 5, **caractérisée en ce que** les éléments réalisés en zinc présentent une épaisseur de paroi inférieure à 0,6 mm, de préférence inférieure à 0,5 mm, plus préférentiellement 0,4 mm.

7. Hotte d'extraction de fumée (20) selon l'une quelconque des revendications 1 à 6, **caractérisée en ce que** le moteur (6) est disposé sur un côté du logement (2), lequel côté est parallèle à la direction de déplacement (16) de la feuille (5).

8. Hotte d'extraction de fumée (20) selon l'une quelconque des revendications 1 à 7, **caractérisée en ce que** l'élément d'entraînement (7) est disposé au niveau d'un bord de la feuille (5), de préférence au niveau du bord à côté du moteur (6), et s'étend de préférence sur la longueur de la feuille (5).

9. Hotte d'extraction de fumée (20) selon l'une quelconque des revendications 1 à 8, **caractérisée en ce que** le moteur (6) est un moteur pas à pas.

10. Hotte d'extraction de fumée (20) selon l'une quelconque des revendications 1 à 9, **caractérisée en ce que** l'élément d'entraînement (7) est une crémaillère et l'élément de liaison (8) un engrenage.

11. Hotte d'extraction de fumée (20) selon l'une quelconque des revendications 1 à 10, **caractérisée en ce qu'**une zone d'ouverture de l'entrée (3) et une zone d'ouverture de la sortie (4) présentent des formes différentes, notamment que la zone d'ouverture de la sortie (4) présente une forme ronde ou circulaire et la zone d'ouverture de l'entrée (3) présente une forme rectangulaire ou carrée.

12. Hotte d'extraction de fumée (20) selon la revendication 11, **caractérisée en ce que** le logement (2) comprend en outre au moins un élément de transition (10a, 10b) pour modifier, en particulier augmenter, la zone d'ouverture de la sortie (4) et/ou la zone d'ouverture de l'entrée (3).

13. Hotte d'extraction de fumée (20) selon l'une quelconque des revendications 1 à 12, **caractérisée en ce qu'**un dispositif de mesure (15) est disposé le long du trajet d'écoulement au niveau du logement (2) pour mesurer une pression du flux d'air (13) entre l'entrée (3) et la sortie (4).

14. Hotte d'extraction de fumée (20) selon l'une quelconque des revendications 1 à 13, **caractérisée en ce que** le logement (2), comprenant notamment une partie de guidage (2a), une autre partie (2b), l'élément de transition (10a, 10b), l'élément de guidage (9) et/ou le dispositif de mesure (15) est réalisé d'une seule pièce par moulage.

15. Hotte d'extraction de fumée (20) selon l'une quelconque des revendications 1 à 14, comprenant en outre un élément de guidage d'air (22) à l'intérieur de la hotte d'extraction de fumée (20), qui relie fluidiquement l'ouverture d'aspiration (25) au conduit d'évacuation (21), dans laquelle le dispositif (1) est disposé à l'intérieur de l'élément de guidage d'air (22) ou en tant que dispositif de liaison entre l'élément de guidage d'air (22) et le conduit d'évacuation (21).

16. Hotte d'extraction de fumée (20) selon l'une quelconque des revendications 14 ou 15, comprenant en outre un générateur de flux (23) pour fournir le flux d'air (13) pour aspirer les fumées.

17. Hotte d'extraction de fumée (20) selon l'une quelconque des revendications 14 à 16, comprenant en outre un dispositif de nettoyage (24) pour nettoyer partiellement le flux d'air (13) pour la recirculation.

18. Système de ventilation pour une maison ou un bâtiment, comprenant
au moins une hotte d'extraction de fumée (20) selon l'une quelconque des revendications 1 à 17, et un conduit d'évacuation central, qui est relié au conduit d'évacuation (21) de la hotte d'extraction de fumée (20), dans lequel le conduit d'évacuation central comprend un générateur de flux central pour fournir le flux d'air (13).

19. Système de ventilation selon la revendication 18, **caractérisé en ce que** le générateur de flux (23) de la hotte d'extraction de fumée (20) et le générateur de flux central agissent de concert l'un avec l'autre pour faire régner une pression constante dans le conduit d'évacuation (21) et le conduit d'évacuation central.
